(19) Europäisches Patentamt
European Patent Office
Office européen des brevets

(11) **EP 2 065 723 A1**

(12) **EUROPEAN PATENT APPLICATION**

(43) Date of publication:
**03.06.2009 Bulletin 2009/23**

(51) Int Cl.:
**G01S 5/14** *(2006.01)* **G01C 21/26** *(2006.01)*

(21) Application number: **07291367.6**

(22) Date of filing: **15.11.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicants:
- **ASTRIUM SAS**
  **75216 Paris Cedex 16 (FR)**
- **VOLKSWAGEN AG**
  **38436 Wolfsburg (DE)**

(72) Inventors:
- **Lienkamp, Markus**
  **38108 Braunschweig (DE)**
- **Kessler, Christoph**
  **38108 Braunschweig (DE)**
- **Ripple, Martin U.**
  **78100 St. Germain en Laye (FR)**

(74) Representative: **Hummel, Adam**
  **EADS Deutschland GmbH**
  **Patentabteilung**
  **81663 München (DE)**

(54) **Method and device for improving positioning accuracy in the across track axis for a road navigation application**

(57)     The invention relates to a method for improving positioning accuracy in the across track axis for a road navigation application using a Global Navigation Satellite System - GNSS, comprising
- receiving signals from n satellite of the GNSS in view (S10),
- processing a n-dimensional vector y (S12), which represents the difference between the ranges observed from the n satellite of the GNSS in view, and the theoretical range from an arbitrary chosen linearization space/time point and the n satellite in view,
- estimating a vector x (S14) representing the user space/ time position respective to the linearization space/time point by using the processed vector y, a satellite geometric matrix G, and a weighting matrix W equal to the invert of the variance of user ranging errors,
- measuring the accuracy of positioning (S16) along a direction D perpendicular to a vehicle motion by the variance of the expression $(D^T x)$, and
- finding for the direction D the weighting matrix W(D) (S18) that minimizes the variance of the expression $(D^T x)$.

Fig. 1

**Description**

The invention relates to a method and device for improving positioning accuracy in the across track axis for a road navigation application, according to claim 1 and 5, respectively.

Satellite systems for worldwide navigation (GNSS; GNSS = Global Navigation Satellite System) allow to accurately determine the position on earth or in the air. GNSS systems, such as for example the actually constructed European satellite navigation system, better known under the name "Galileo", comprise a plurality of satellites and a control system, particularly based on Earth and comprising several control stations.

For the use of a GNSS in automotive applications, the localization in vertical direction is of almost no relevance and hence can be accomplished less. A similar statement is valid for the longitudinal direction. In contrast to that, the positioning accuracy in lateral direction is of major importance for some automotive applications. This is especially true for the use of a GNSS in driver assistance systems like lane departure warning or lane keeping systems. A location accuracy of about 1 meter may be sufficient for most driver assistance systems focusing on longitudinal control of the vehicle like digital map supported ACC (Automatic Cruise Control). In lateral direction, however, an accuracy of about 10 to about 20 centimeter or even better may be required. Using these relations, the localization accuracy in lateral direction could be improved

Therefore, it is an object of the present invention to provide a method and device for improving positioning accuracy in the across track axis for a road navigation application.

This object is achieved by a method for improving positioning accuracy in the across track axis for a road navigation application with the features of claim 1 and a corresponding device with the features of claim 5. Further embodiments of the invention are subject of the dependent claims.

A basic idea of the invention is to adapt an algorithm, performed in a road navigation application for determining the actual position with a high accuracy, in that a weighting matrix W is found for a direction D perpendicular to the vehicle motion, which minimizes the variance of quantity ($D^T$ x), wherein x is a vector representing a user space/time position respective to a linearization space/time point. As a result, the accuracy in the across track axis may be significantly improved to the potential detriment of the accuracy in other directions, which are usually less critical in case of a road navigation application.

According to an embodiment of the invention, a method for improving positioning accuracy in the across track axis for a road navigation application using a GNSS is provided, wherein the method comprises

- receiving signals from n satellite of the GNSS in view,

- processing a n-dimensional vector y, which represents the difference between the ranges observed from the n satellite of the GNSS in view, and the theoretical range from an arbitrary chosen linearization space/time point and the n satellite in view,

- estimating a vector x representing the user space/time position respective to the linearization space/time point by using the processed vector y, a satellite geometric matrix G, and a weighting matrix W equal to the invert of the variance of user ranging errors,

- measuring the accuracy of positioning along a direction D perpendicular to a vehicle motion by the variance of the expression ($D^T$ x), and

- finding for the direction D the weighting matrix W(D) that minimizes the variance of the expression ($D^T$ x).

According to an embodiment of the invention, the vector x may be a 4-dimensional vector, and the satellite geometric matrix G may be a n-by-4 matrix.

According to a further embodiment of the invention, a computer program may be provided, which is enabled to carry out the above method according to the invention when executed by a computer.

According to a further embodiment of the invention, a record carrier storing a computer program according to the invention may be provided, for example a CD-ROM, a DVD, a memory card, a diskette, or a similar data carrier suitable to store the computer program for electronic access.

A yet further embodiment of the invention provides a device for improving positioning accuracy in the across track axis for a road navigation application using a GNSS, wherein the device comprises

- receiver means adapted for receiving signals from n satellite of the GNSS in view,

- processor means adapted for processing a n-dimensional vector y, which represents the difference between the ranges observed from the n satellite of the GNSS in view, and the theoretical range from an arbitrary chosen linearization space/time point and the n satellite in view,

- estimation means adapted for estimating a vector x representing the user space/time position respective to the linearization space/time point by using the processed vector y, a satellite geometric matrix G, and a weighting matrix W equal to the invert of the variance of user ranging errors,

- measurement means adapted for measuring the accuracy of positioning along a direction D perpendicular to a vehicle motion by the variance of the expression ($D^T$ x), and

- minimization means adapted for finding for the direction D the weighting matrix W(D) that minimizes the variance of the expression ($D^T$ x).

According to an embodiment of the invention, as microprocessor and a memory, storing a program, may embody the processor means, the estimation means, the measurement means and the minimization means.

Also, an embodiment of the invention relates to a GNSS navigation device comprising a device for improving positioning accuracy in the across track axis for a road navigation according to the invention.

The GNSS navigation device may be according to a further embodiment of the invention a road navigation device, particularly adapted to be integrated in automotive applications.

These and other aspects of the invention will be apparent from and elucidated with reference to the embodiments described hereinafter.

The invention will be described in more detail hereinafter with reference to exemplary embodiments. However, the invention is not limited to these exemplary embodiments.

Fig. 1 shows a flowchart of an embodiment of the method for improving positioning accuracy in the across track axis for a road navigation application using a GNSS according to the invention; and

Fig. 2 shows an embodiment of a device for improving positioning accuracy in the across track axis for a road navigation application using a GNSS according to the invention.

In the following, functionally similar or identical elements may have the same reference numerals. In the following description, absolute values may be contained. These absolute values are only exemplary values and do not restrict the scope of the present invention.

Current positioning algorithms provide solutions optimizing accuracy in three directions: north, east, and up. With a new algorithm according to the invention, the accuracy in the across track axis of a road may be improved, to the detriment of the accuracy in other directions, as will be shown in the following.

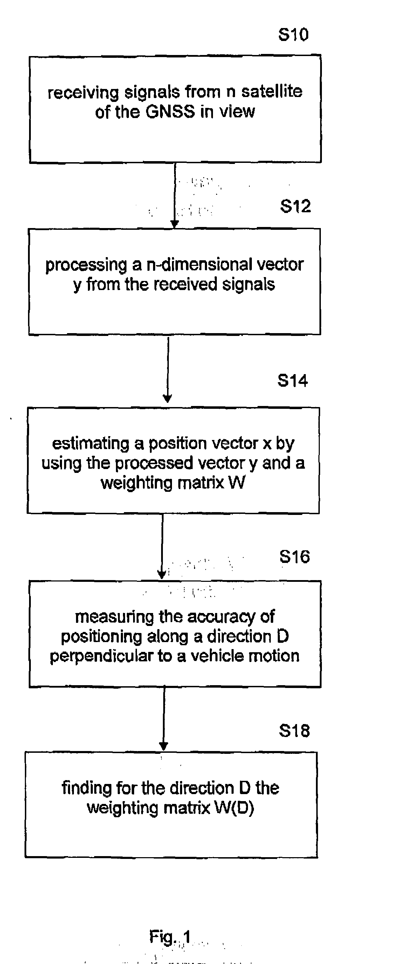

Fig. 1 shows a flowchart of a method for improving positioning accuracy in the across track axis for a road navigation application using a GNSS according to the invention. The method is typically at least partly implemented as a computer program, which may be executed by a microprocessor of a road navigation application.

In step S10 of the method, signals from n satellite of the GNSS in view are received.

In step S12, an n-dimensional vector y is processed, wherein y represents the difference between the ranges observed from a user to n satellite of the GNSS in view, and the theoretical range from an arbitrary chosen linearization space/time point and the n satellite in view.

In step S14, a vector x is estimated, wherein x is a 4-dimensional vector representing the user space/time position respective to the linearization space/time point. The estimation is performed by using the processed vector y, a satellite geometric matrix G, and a weighting matrix W equal to the invert of the variance of user ranging errors and processing the used values according to the following linear equation:

$$y = G\,x \qquad (1)$$

G is a satellite geometric n-by-4 matrix.

Position estimation results in the estimation of x for a given measure y. This is based on least square algorithm estimation giving as a solution of the equation (1) the following equation:

$$x = (G^T\,W\,G)^{-1}\,G^T\,W\,y \qquad (2)$$

W is a weighting matrix equal to the invert of the variance of user ranging errors: W gives a relative weight to each range measurement that is inverse proportional to the assumed variance of that measurement.

The accuracy of positioning may be measured by the variance of the estimated position x. Thus, in step S16, the accuracy of positioning along a direction D perpendicular to a vehicle motion is measured by the variance of the expression $(D^T\,x)$.

In step S18, for the direction D, the weighting matrix W(D) is found that minimizes the variance of the expression $(D^T\,x)$.

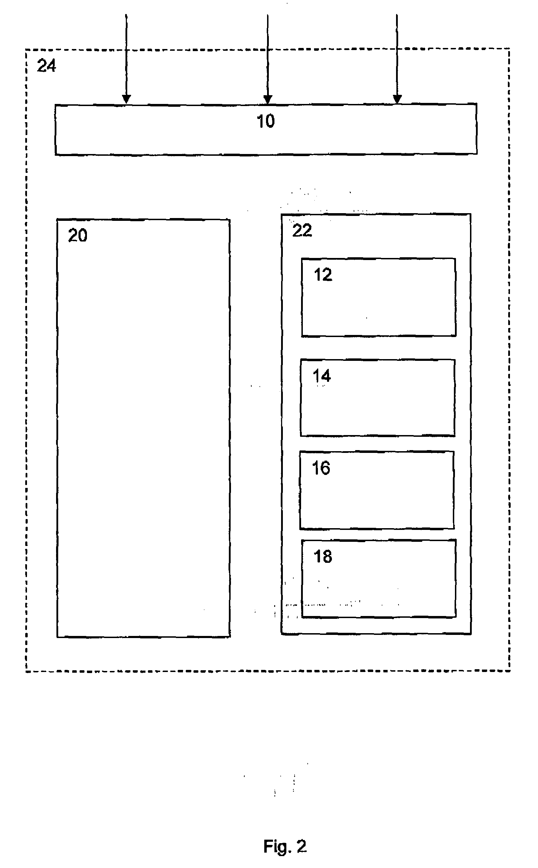

Fig. 2 shows in a lock diagram a device for improving positioning accuracy in the across track axis for a road navigation application using a GNSS according to the invention. The device comprises receiver means 10 for receiving signals satellites of the GNSS. The device further comprises a microprocessor 20 and a memory 22, in which a program is stored which embodies

- processor means 12 being adapted for processing a n-dimensional vector y, which represents the difference between the ranges observed from the n satellite of the GNSS in view, and the theoretical range from an arbitrary chosen linearization space/time point and the n satellite in view,

- estimation means 14 being adapted for estimating a vector x representing the user space/time position respective to the linearization space/time point by using the processed vector y, a satellite geometric matrix G, and a weighting matrix W equal to the invert of the variance of user ranging errors,

- measurement means 16 being adapted for measuring the accuracy of positioning along a direction D perpendicular to a vehicle motion by the variance of the expression $(D^T\,x)$, and

- minimization means 18 being adapted for finding for the direction D the weighting matrix W(D) that minimizes the variance of the expression $(D^T\,x)$.

In summary, the means 12, 14, 16, and 18 are adapted to perform the steps S12 to S18 of the method of the invention, as described above.

**Reference numerals**

| 10 | receiver means |
|----|----------------|
| 12 | processor means |
| 14 | estimation means |
| 16 | measurement means |
| 18 | minimization means |
| 20 | microprocessor |
| 22 | memory |
| S10-S18 | method steps |

**Claims**

1. A method for improving positioning accuracy in the across track axis for a road navigation application using a Global Navigation Satellite System - GNSS, comprising

   - receiving signals from n satellite of the GNSS in view (S10),
   - processing a n-dimensional vector y (S12), which represents the difference between the ranges observed from the n satellite of the GNSS in view, and the theoretical range from an arbitrary chosen linearization space/time point and the n satellite in view,
   - estimating a vector x (S14) representing the user space/time position respective to the linearization space/time point by using the processed vector y, a satellite geometric matrix G, and a weighting matrix W equal to the invert of the variance of user ranging errors,
   - measuring the accuracy of positioning (S16) along a direction D perpendicular to a vehicle motion by the variance of the expression ($D^T$ x), and
   - finding for the direction D the weighting matrix W(D) (S18) that minimizes the variance of the expression ($D^T$ x).

2. The method of claim 1, wherein the vector x is a 4-dimensional vector, and the satellite geometric matrix G is n-by-4 matrix.

3. A computer program enabled to carry out the method according to claim 1 or 2 when executed by a computer.

4. A record carrier storing a computer program according to claim 3.

5. A device for improving positioning accuracy in the across track axis for a road navigation application using a Global Navigation Satellite System - GNSS, comprising

   - receiver means (10) adapted for receiving signals from n satellite of the GNSS in view,
   - processor means (12) adapted for processing a n-dimensional vector y, which represents the difference between the ranges observed from the n satellite of the GNSS in view, and the theoretical range from an arbitrary chosen linearization space/time point and the n satellite in view,
   - estimation means (14) adapted for estimating a vector x representing the user space/time position respective to the linearization space/time point by using the processed vector y, a satellite geometric matrix G, and a weighting matrix W equal to the invert of the variance of user ranging errors,
   - measurement means (16) adapted for measuring the accuracy of positioning along a direction D perpendicular to a vehicle motion by the variance of the expression ($D^T$ x), and
   - minimization means (18) adapted for finding for the direction D the weighting matrix W(D) that minimizes the variance of the expression ($D^T$ x).

6. The device of claim 5, wherein a microprocessor (20) and a memory (22), storing a program, embodying the processor means (12), the estimation means (14), the measurement means (16) and the minimization means (18).

7. A GNSS navigation device (24) comprising a device of claim 5 or 6.

8. The GNSS navigation device (24) being a road navigation device, particularly adapted to be integrated in automotive applications.

S10

receiving signals from n satellite
of the GNSS in view

S12

processing a n-dimensional vector
y from the received signals

S14

estimating a position vector x by
using the processed vector y and a
weighting matrix W

S16

measuring the accuracy of
positioning along a direction D
perpendicular to a vehicle motion

S18

finding for the direction D the
weighting matrix W(D)

Fig. 1

**Fig. 2**

6

**EP 2 065 723 A1**

**European Patent Office**

# EUROPEAN SEARCH REPORT

Application Number

EP 07 29 1367

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2002/057217 A1 (MILNES KENNETH A [US] ET AL) 16 May 2002 (2002-05-16) | 8 | INV.<br>G01S5/14<br>G01C21/26 |
| A | * paragraph [0048] *<br>* paragraphs [0104] - [0112] *<br>----- | 1-7 | |
| A | GB 2 273 218 A (CATERPILLAR INC [US])<br>8 June 1994 (1994-06-08)<br>* abstract *<br>----- | 1-8 | |
| | | | TECHNICAL FIELDS SEARCHED (IPC) |
| | | | G01S<br>G01C |

The present search report has been drawn up for all claims

| Place of search | Date of completion of the search | Examiner |
|---|---|---|
| Munich | 26 May 2008 | Ó Donnabháin, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

7

**ANNEX TO THE EUROPEAN SEARCH REPORT
ON EUROPEAN PATENT APPLICATION NO.**

EP 07 29 1367

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2008

| Patent document cited in search report | Publication date | Patent family member(s) | Publication date |
|---|---|---|---|
| US 2002057217 A1 | 16-05-2002 | US 2003048218 A1 | 13-03-2003 |
| GB 2273218 A | 08-06-1994 | DE 4340954 A1 | 09-06-1994 |
| | | JP 3361863 B2 | 07-01-2003 |
| | | JP 6213992 A | 05-08-1994 |
| | | US 5430654 A | 04-07-1995 |

EPO FORM P0459

For more details about this annex : see Official Journal of the European Patent Office, No. 12/82